# EUROPEAN PATENT APPLICATION

(11) **EP 2 175 130 A2**
(43) Date of publication of application: **14.04.2010**
(21) Application number: 09172033.4
(22) Date of filing: 02.10.2009
(51) Int. Cl.: F03D 7/02

(54) **Systems and methods involving wind turbine bearing detection and operation**

(30) Priority: 10.10.2008 US 249038
(71) Applicant: General Electric Company, Schenectady, NY 12345 (US)
(72) Inventor: Altenschulte, Markus, 48480 Spelle (DE)
(74) Representative: Bedford, Grant Richard

(57) **Abstract**

A method for determining a bearing of a wind turbine (200) comprising, receiving a signal (205) from a satellite (203) at a first antenna (208) disposed on a wind turbine (200), receiving the signal (205) from the satellite (203) at a second antenna (210) disposed on the wind turbine(200), determining a position of the first antenna (208) responsive to receiving the signal (205), determining a position of the second antenna (210) responsive to receiving the signal (205), calculating a line of bearing (302) intersecting the position of the first antenna (208) and the position of the second antenna (210), determining an angle of the line of bearing (302) relative to a reference bearing, and defining the bearing of the wind turbine (200) as the angle of the line of bearing (302) relative to the reference bearing.

## Description

The subject matter disclosed herein relates generally to wind turbines and methods and systems for determining a bearing direction of wind turbines.

Wind turbines are often used to generate electrical power. Wind turbines are most effective when they face the direction of the wind and the wind is unobstructed. Since wind direction varies, wind turbines are designed to rotate to face the wind as the wind direction varies. Wind turbines are disposed in grid patterns that are designed to efficiently utilize the prevailing winds in a given location. As the direction of the wind changes, the wind turbine rotates, however some wind directions may result in obstructions (e.g., natural, man made, or other wind turbines in the array) causing undesirable wind turbulence (wake effect) to particular turbines in an array. If the direction of a wind turbine is accurately known, the operation of the array may be adjusted to compensate for a given wind direction, allowing the entire array to operate more efficiently.

Previous methods of determining a direction that a wind turbine faces (bearing) are inaccurate with a degree of error of up to +/- 10 degrees. Accurately determining and controlling the bearing of wind turbines increases the efficiency of the wind turbines. A system and method that economically and effectively determines a bearing of a wind turbine is desired.

According to one aspect of the invention, method for determining a bearing of a wind turbine comprising, receiving a signal from a satellite at a first antenna disposed on a wind turbine, receiving the signal from the satellite at a second antenna disposed on the wind turbine, determining a position of the first antenna responsive to receiving the signal, determining a position of the second antenna responsive to receiving the signal, calculating a line of bearing intersecting the position of the first antenna and the position of the second antenna, determining an angle of the line of bearing relative to a reference bearing, and defining the bearing of the wind turbine as the angle of the line of bearing relative to the reference bearing.

According to another aspect of the invention, A wind turbine system comprising, a wind turbine, a controller operative to control an operation of the wind turbine, a first antenna disposed on the wind turbine operative to receive a signal from a satellite, a second antenna disposed on the wind turbine operative to receive the signal from the satellite, and a processor communicatively connected to the controller, the first antenna, and the second antenna, operative to process the signal received from the first antenna and determine a position of the first antenna, process the signal received from the second antenna and determine a position of the second antenna, calculate a line of bearing intersecting the position of the first antenna and the position of the second antenna, determine an angle of the line of bearing relative to a reference bearing, define the bearing of the wind turbine as the angle of the line of bearing relative to the reference bearing, and send the defined bearing of the wind turbine to the controller.

These and other advantages and features will become more apparent from the following description taken in conjunction with the drawings.

The subject matter which is regarded as the invention is particularly pointed out and distinctly claimed in the claims at the conclusion of the specification. The foregoing and other objects, features, and advantages of the invention are apparent from the following detailed description taken in conjunction with the accompanying drawings in which:
- FIG. 1: illustrates an example of a wind turbine array.
- FIG. 2: illustrates a side view of exemplary embodiment of a wind turbine system.
- FIG. 3: illustrates a top view of the wind turbine system of FIG. 2.

The detailed description explains embodiments of the invention, together with advantages and features, by way of example with reference to the drawings.

Wind turbines generate electrical power for electrical systems. Often, a number of wind turbines are arranged in an array over a geographical space to more efficiently harness wind power. Wind turbines are more efficient when they directly face a direction of the wind (wind bearing). Because the direction of the wind changes, the wind turbines may rotate the bearing of the wind turbine (turbine bearing) to face the wind bearing. Accurately determining the turbine bearing relative to a known reference bearing, for example true North is desirable to increase the efficiency of wind turbines and wind turbine arrays.

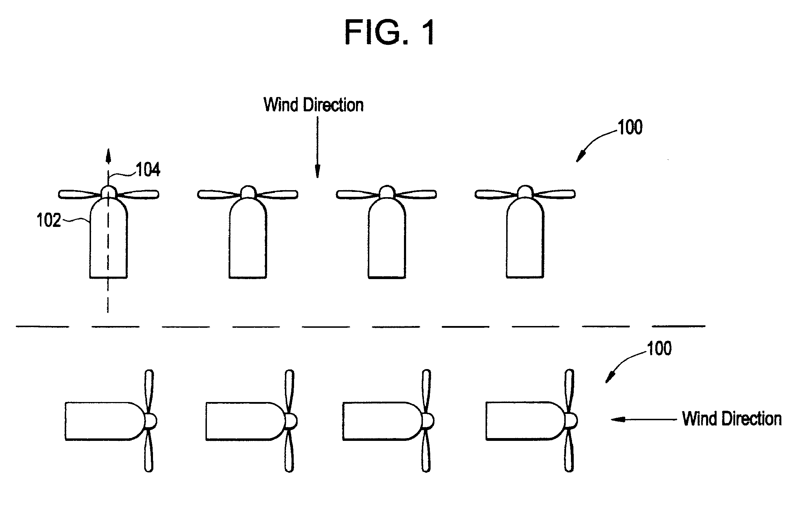

FIG. 1 illustrates an example of a wind turbine array 100. The array 100 includes a row of wind turbines 102. Line 104 illustrates a line of bearing that corresponds to the turbine bearing. The upper illustration depicts an example of an orientation of the array 100 when the wind direction is perpendicular to the array. When the wind direction is perpendicular to the array, there are no obstructions to the wind that turns the wind turbines 102. The lower illustration depicts an example of the orientation of the array 100 when the wind direction has shifted to being parallel to the array 100. In the lower illustration, the right most wind turbine 102 obstructs the flow of wind. The obstruction may cause undesirable turbulence in the other wind turbines 102 of the array 100. To more efficiently produce electrical power, control systems may be used to disable particular wind turbines 102 that are subjected to (or cause) turbulent wind flow when the wind is prevailing from a particular wind bearing.

In general operation, a controller determines a wind bearing and directs the wind turbines to rotate such that the turbine bearing is reciprocal to the wind bearing. The controller may compare the wind bearing to a data base to determine if at a given wind bearing a particular wind turbine should be disabled to mitigate the effects of turbulent wind on the array. Disabling particular wind turbines for a given wind bearing may reduce the overall effects of turbulent wind on the array and increase the net power output of the array.

Accurate determination of the wind bearing and the turbine bearing of each wind turbine in an array increases the efficiency of the array. Previous methods of determining turbine bearing relied on a position sensor in the wind turbine that was used to determine a bearing of the wind turbine relative to a fixed reference bearing of a base of the wind turbine. The position sensor was calibrated by a technician using a hand held magnetic compass and a visual reference. Usually the calibration procedure is performed while the technician is standing at the base of a tower of the wind turbine up to 100 meters from the rotating turbine. The laborious method resulted in inaccuracies due to human error and inaccurate measuring procedures that approached +/- 10 degrees. Thus, a manually calibrated wind turbine may send inaccurate turbine bearing measurements that result in a loss of array efficiency.

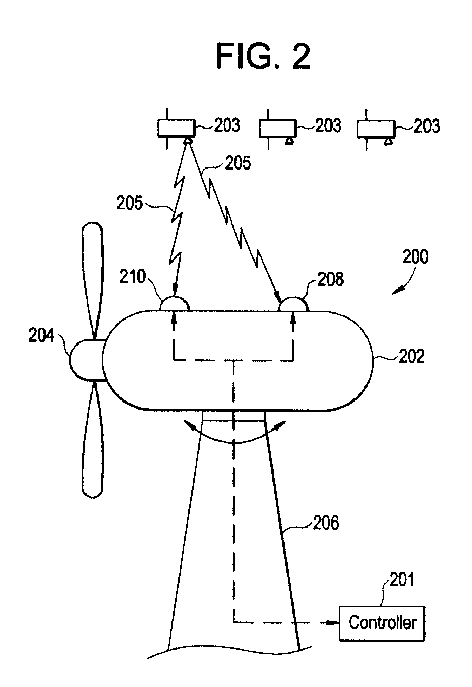

FIG. 2 illustrates a side view of exemplary embodiment of a wind turbine system 200. The wind turbine system 200 includes a nacelle portion 202 that houses a generator (not shown) connected to a rotor assembly 204. The nacelle portion 202 is connected to a tower 206. The nacelle portion 202 is operative to rotate relative to the tower 206. The operations of the wind turbine system may be controlled with a controller 201 that may include a processor. The controller 201 is communicatively linked to the electrical and mechanical systems in the nacelle portion 202 and may be used, for example, to control the rotation of the nacelle portion 202 relative to the tower 206.

Though a magnetic compass system may be placed in the nacelle portion 202 to directly measure the wind turbine bearing, the use of a magnetic compass system presents a few drawbacks. The performance of a magnetic compass system depends on the magnetic fields measured by the magnetic compass system. The fields from the electrical generator in the nacelle, the rotating rotor assembly, and the metal structure of the wind turbine all affect the magnetic fields measured by the magnetic compass system. Additionally, magnetic compasses determine magnetic North, which is not the same as true North (located at the North Pole). The magnetic fields of the Earth are variable depending on geographical location and further change over time. Thus, to accurately determine magnetic North, a magnetic compass is calibrated to correct for geographical location. To determine true North from a magnetic North determination, calculations are performed to correct for a change in the position of magnetic North over time.

Referring to FIG. 2, the wind turbine system 200 further includes a first antenna 208 and a second antenna 210 the first antenna 208 and the second antenna 210 are communicatively linked to the controller 201 that is operative to process signals received from the first antenna 208 and the second antenna 210. Satellites 203 are shown that send signals 205 used to determine a geographical position. The satellites 203 may be, for example, Global Positioning System (GPS) satellites. In the illustrated embodiment, the first antenna 208, the second antenna 210, and the controller 201 are compatible with the GPS system.

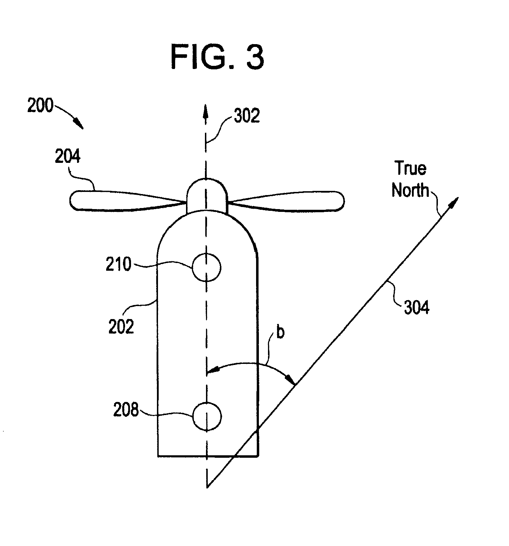

FIG. 3 illustrates a top view of the wind turbine system 200. In operation, the first antenna 208 and the second antenna 210 receive signals from the satellites 203. The signals are sent to the controller 201 (of FIG. 2) that processes the signals and determines a geographical position of the first antenna 208 and a geographical position of the second antenna 210. Once the geographical positions of each of the antennas are known, a line of bearing 304 may be calculated that intersects the geographical position of the first antenna 208 and a geographical position of the second antenna 210. In the illustrated embodiment, the first antenna 208 and the second antenna 210 are positioned in a line that is parallel to an axis of rotation of the rotor assembly 204. Thus, the line of bearing 302 corresponds to the axis of rotation of the rotor assembly 204. Once the line of bearing 302 is calculated, an angle (b) of the line of bearing relative to a reference bearing 304 may be calculated. Once b is calculated, the bearing of the axis of rotation of the rotor assembly 204 has been accurately determined.

In the illustrated embodiment, the reference bearing 304 is true north; however other embodiments may use an alternative reference bearing. When true North defines the reference bearing, the line of bearing 302 is a true bearing.

Other embodiments may include antennas that are not parallel to the axis of rotation of the rotor assembly 204. If the antennas are not parallel to the axis of rotation of the rotor assembly 204, the controller 201 may process an algorithm that adjusts for the location of the antennas relative to the axis of rotation of the rotor assembly 204 resulting in a second line of bearing that corresponds to the axis of rotation of the rotor assembly 204. The second line of bearing is then used to calculate the angle (b).

Once the bearing of the axis of rotation of the rotor assembly 204 has been accurately determined, the controller 201 (of FIG. 2) may be used to control the wind turbine system 200 to more efficiently operate in an array. If the wind direction is known, the controller may direct the wind turbine to rotate the axis of rotation of the rotor assembly 204 (via rotating the nacelle portion 202) to face the wind direction. The controller 201 may also determine that for a given wind bearing threshold, the wake effect on wind turbine array may be reduced if the wind turbine system 200 is halted or operated power curtailed, reducing the net wake effect on the array and increasing the electrical power output of the array.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. A method for determining a bearing of a wind turbine comprising:
   receiving a signal from a satellite at a first antenna disposed on a wind turbine;
   receiving the signal from the satellite at a second antenna disposed on the wind turbine;
   determining a position of the first antenna responsive to receiving the signal;
   determining a position of the second antenna responsive to receiving the signal;
   calculating a line of bearing intersecting the position of the first antenna and the position of the second antenna;
   determining an angle of the line of bearing relative to a reference bearing; and
   defining the bearing of the wind turbine as the angle of the line of bearing relative to the reference bearing.
2. The method of clause 1, wherein the reference bearing is true North.
3. The method of any preceding clause, wherein the first antenna and the second antenna are disposed on a nacelle portion of the wind turbine.
4. The method of any preceding clause, wherein the satellite is a global positioning system (GPS) satellite.
5. The method of any preceding clause, wherein the method further comprises sending a control signal operative to control the operation of the wind turbine responsive to defining the bearing of the wind turbine.
6. The method of any preceding clause, wherein the control signal includes an instruction to rotate a nacelle portion of the wind turbine relative to a base of the wind turbine.
7. The method of any preceding clause, wherein the control signal includes an instruction to halt a rotation of a rotor portion of the wind turbine.
8. The method of any preceding clause, wherein the control signal includes an instruction to slow a rotation of a rotor portion of the wind turbine.
9. A wind turbine system comprising:
   a wind turbine;
   a controller operative to control an operation of the wind turbine;
   a first antenna disposed on the wind turbine operative to receive a signal from a satellite;
   a second antenna disposed on the wind turbine operative to receive the signal from the satellite; and
   a processor communicatively connected to the controller, the first antenna, and the second antenna, operative to process the signal received from the first antenna and determine a position of the first antenna, process the signal received from the second antenna and determine a position of the second antenna, calculate a line of bearing intersecting the position of the first antenna and the position of the second antenna, determine an angle of the line of bearing relative to a reference bearing, define the bearing of the wind turbine as the angle of the line of bearing relative to the reference bearing, and send the defined bearing of the wind turbine to the controller.
10. The system of clause 9, wherein the reference bearing is true North.
11. The system of clause 9 or 10, wherein the first antenna and the second antenna are disposed on a nacelle portion of the wind turbine.
12. The system of any of clauses 9 to 11, wherein the satellite is a global positioning system (GPS) satellite.
13. The system of any of clauses 9 to 12, wherein the controller is operative to send a control signal to the wind turbine.
14. The system of any of clauses 9 to 13, wherein the control signal includes an instruction to rotate a nacelle portion of the wind turbine relative to a base of the wind turbine.
15. The system of any of clauses 9 to 14, wherein the control signal includes an instruction to halt a rotation of a rotor portion of the wind turbine.
16. The system of any of clauses 9 to 15, wherein the control signal includes an instruction to slow a rotation of a rotor portion of the wind turbine.

## Claims

1. A method for determining a bearing of a wind turbine (200) comprising:
receiving a signal (205) from a satellite (203) at a first antenna (208) disposed on a wind turbine (200);
receiving the signal (205) from the satellite (203) at a second antenna (210) disposed on the wind turbine(200);
determining a position of the first antenna (208) responsive to receiving the signal (205);
determining a position of the second antenna (210) responsive to receiving the signal (205);
calculating a line of bearing (302) intersecting the position of the first antenna (208) and the position of the second antenna (210);
determining an angle of the line of bearing (302) relative to a reference bearing (304); and
defining the bearing of the wind turbine (200) as the angle of the line of bearing relative to the reference bearing.

2. The method of claim 1, wherein the reference bearing is true North.

3. The method of any preceding claim, wherein the first antenna (208) and the second antenna (210) are disposed on a nacelle portion (202) of the wind turbine (200).

4. The method of any preceding claim, wherein the satellite (203) is a global positioning system (GPS) satellite.

5. The method of any preceding claim, wherein the method further comprises sending a control signal operative to control the operation of the wind turbine (200) responsive to defining the bearing of the wind turbine.

6. The method of any preceding claim, wherein the control signal includes an instruction to rotate a nacelle portion (202) of the wind turbine (200) relative to a base (206) of the wind turbine (200).

7. The method of any preceding claim, wherein the control signal includes an instruction to halt a rotation of a rotor portion (204) of the wind turbine (200).

8. The method of any preceding claim, wherein the control signal includes an instruction to slow a rotation of a rotor portion (204) of the wind turbine (200).

9. A wind turbine system comprising:
a wind turbine (200);
a controller (201) operative to control an operation of the wind turbine;
a first antenna (208) disposed on the wind turbine operative to receive a signal from a satellite;
a second antenna (210) disposed on the wind turbine operative to receive the signal from the satellite; and
a processor communicatively connected to the controller, the first antenna, and the second antenna, operative to process the signal received from the first antenna and determine a position of the first antenna, process the signal received from the second antenna and determine a position of the second antenna, calculate a line of bearing intersecting the position of the first antenna and the position of the second antenna, determine an angle of the line of bearing relative to a reference bearing, define the bearing of the wind turbine as the angle of the line of bearing relative to the reference bearing, and send the defined bearing of the wind turbine to the controller.

10. The system of claim 9, wherein the reference bearing is true North.
